# EUROPEAN PATENT SPECIFICATION

(11) **EP 0 517 722 B1**
(45) Date of publication and mention of the grant of the patent: **01.12.1993**
(21) Application number: 91904070.9
(22) Date of filing: 23.02.1991
(51) Int. Cl.: G03C 11/02, G03B 27/62

(54) **IMPROVEMENTS IN AND RELATING TO FILM FRAME NUMBER IDENTIFICATION**
VERBESSERUNGEN IN ODER BEZUGNEHMEND AUF DIE FILMAUFNAHMENUMMERIDENTIFIZIERUNG
AMELIORATION DE L'IDENTIFICATION DU NUMERO D'UNE IMAGE DE FILM

(30) Priority: 01.03.1990 GB 9004571
(43) Date of publication of application: 16.12.1992
(73) Proprietor: KODAK LIMITED, Harrow, Middlesex HA1 4TY (GB); EASTMAN KODAK COMPANY, Rochester, New York 14650-2201 (US)
(72) Inventor: RIDER, Christopher Barrie c/o Kodak Limited, Harrow, Middlesex, HA1 4TY (GB); Graebe, Christopher Michael c/o Kodak Limited, Harrow, Middlesex, HA1 4TY (GB); Ward, Paul Courtenay c/o Kodak Limited, Harrow, Middlesex, HA1 4TY (GB)
(74) Representative: Mackett, Margaret Dawn
(86) International application number: EP9100347
(87) International publication number: WO9113383

(56) References cited:
- EP-A- 0 293 887
- EP-A- 0 320 880
- EP-A- 0 339 643
- EP-A- 0 339 645
- WO-A-83/00068
- DE-A- 3 644 031
- FR-A- 2 379 839
- US-A- 3 454 336
- Patent Abstracts of Japan, vol. 6, no. 2 (P-96)(880) 08 January 1982, & JP A 56128933.
- Patent Abstracts of Japan, vol. 9, no. 292 (P-406)(2015) 19 November 1985, & JP A 60130726.
- Patent Abstracts of Japan, vol. 6, no. 18 (P-100)(896) 02 February 1982, & JP A 56141522.
- Patent Abstracts of Japan, vol. 9, no. 62 (P-342)(1785) 19 March 1985, & JP A 59197039.

## Description

This invention relates to identifying frame numbers on a film strip and identifying frames by number.

Identification of frames of photographic film has many uses. For example, the film manufacturer may mark 35mm film with edge numbers such as 1, 1A, 2, 2A etc in known manner at nominal half frame intervals of 19mm, and the photographer can identify required frames by such numbers, e.g. for reprinting. However, it sometimes happens that, for example, several shots are similar and a mistake may be made in trying to identify the negative corresponding to a particular print that it is desired to have reprinted. Another difficulty arises in that the frames may differ from the standard spacing and a cumulative or random shift error may occur between the positions of the frames and the corresponding numbering. This is because of variance produced due to individual camera film advance mechanisms. The frames then do not correspond throughout to every second frame number.

Further, after cumulative shifting for a number of frames, the photographer may be uncertain which of two adjacent numbers to use to identify a frame. This problem could be solved to some extent by the person who does the film processing identifying the relevant frame number and writing it on the back of each print made from the film. However, this would be a tedious task and one subject to human error.

Another solution, effective to some extent, would be to have an index number included in each exposed frame. This is described in US-A-4370409. However, this would interfere with the picture and would also require specially made film or cameras.

Again, notches identifying each relevant frame to be printed could be counted to identify a required frame and this number written on to the back of a customer print. Such an arrangement is described in US-A-3454336. However, this would require use of reprinting apparatus which can identify the same notches and is clearly useless if the film is cut into short lengths of a few frames each before reprinting, as is usually the case. A similar situation using cumulative frame numbering is described in US-A-4251156.

It is therefore an object of the present invention to provide a method which can facilitate speedy identification of frame numbers which already exist, such as those on the edge of 35mm film. Such a method can be extremely useful as it can for example be used for writing the numbers thus identified directly and automatically on to the backs of the prints as they are made.

JP-A-56-128933 discloses a method of determining a frame number by detecting the extent of film feed from a reference point so that the frame number can be displayed on a print. In this case, the reference point is determined by detecting a splice forming a connection between two film strips and a perforation in the film strip. Subsequent movement of the film strip is measured by counting the pulses arriving from a rotary encoder.

EP-A-0320880 discloses a method of identifying frame numbers of photographic film. An advanced length of the frame number bar code or the location of a frame number bar code is detected by counting either drive pulses applied to a film advancing motor or output pulses from an encoder once a reference point has been determined.

According to one aspect of the invention there is provided a method of identifying frame numbers on a film strip which comprises a plurality of frames with at least one frame number corresponding to each frame, the frame numbers being arranged along an edge of the film strip, the method comprising:-
identifying a reference frame number;
detecting the occurrence of subsequent and/or precedent other frame numbers or corresponding indications; and
using these items of information in combination to identify at least one of the other frame numbers;
characterized in that the reference frame number is identified using machine detection to detect the number of digits present in each of the frame numbers.

Thus, once one frame number has been identified, other frame numbers can be identified automatically, simply by detecting the occurrence of the other frame numbers or corresponding indications of these, and combining such items of information.

The combining of the items of information may be done in several ways. The reference frame number may be incremented or decremented and this is made to correspond with the detection. For example, usually, the invention will be applied to the case of determining the identity of any particular frame number which appears before a scanner. In this case, the incrementing or decrementing is consequential on the scanner detecting the passage therepast of the other frame numbers, e.g. for printing each frame number on the back of a print when it is made. However, the invention may also be applied to finding a frame number having a predetermined identity, in which case the detecting may be consequential on the incrementing or decrementing, e.g. when looking for a particular frame for reprinting.

Again, the incrementing or decrementing and the detecting may be done correspondingly unit by unit, so that for example, each time a frame number is detected the reference frame number is incremented or decremented by one unit (or half unit, depending upon the numbering system). Again, one of the incrementing or decrementing on the one hand and the detecting on the other hand can be done by a plurality of units (or of half units) at a time and the other then brought into correspondence therewith.

In another embodiment, the (predetermined) frame number of a frame to be reprinted may be subtracted from the reference frame number identified on the film to determine an increment or decrement and the film then moved correspondingly until the number of frames detected totals a like (difference) number.

In a particular case, where the frame numbers comprise edge numbers of the type 1, 1A, 2, 2A etc corresponding to frames in known manner, a particularly useful feature is to identify the reference frame number using machine identification of the number 9 or 10A of the edge numbers.

This is a particularly advantageous feature because the number 9 is the last single character edge number and the number 10A is the first three-character edge number, and as such these numbers particularly lend themselves for convenient machine identification, as will be discussed in more detail below.

Alternatively, the reference frame number can be identified visually, i.e. by a human operator. This is particularly applicable to minilab use. Such identification can be aided if it is done using a viewframe adapted to facilitate selection of one of two adjacent frame numbers appertaining to a frame, especially in the half-frame numbering system, in order to avoid doubt, e.g. one only of two adjacent frame numbers appearing within the field of view of the viewframe at one time, or if parts of two such numbers should both appear it is simple to set out a rule that the lower number (or the one without an "A") shall be the one selected. This method can be made even easier if the viewframe used has within its field of view a central portion and a distinctive edge portion, so that normally there will only be one number within the central portion, but if two numbers are to be seen at once at least one will be within the distinctive edge portion (depending on whether it is at one edge or two opposite edges) and both will be visible at the same time.

The occurrence of other frame numbers can be detected as the numbers themselves or as corresponding indications thereof or as a mixture of both. Since 35mm film is manufactured with its edge frame numbers having strict one-to-one correspondence with sprocket holes and/or DX barcode blocks, the corresponding indications which are detected may comprise the sprocket holes and/or the blocks of DX barcode and it may be simpler to retrofit (i.e. fit to existing apparatus) means according to the invention which makes use of existing means to detect sprocket holes and/or blocks DX barcode.

A particularly simple and economic embodiment utilises for this purpose an existing reader for reading the DX barcode. It may simply extract from the DX barcode reading a count of the number of blocks thereof. Again, it has been found that one and the same reader for reading the DX barcode can also be used to detect the occurrence of the frame numbers or, more particularly usefully, a characteristic of the frame numbers such as the number of characters in each number, e.g. for the method indicated above of machine identification of the number 9 or 10A. It has been found that the ordinary DX barcode reader is sensitive enough to distinguish the number of characters in an alphanumeric edge frame number. It can disting h these from a block of DX barcode by the absence of the usual start code and stop code signals at the beginning and end of DX barcode.

Since frame numbers are being identified by their occurrence, and this is regualar, the method can readily be extended to identify the number of a frame having no number on the film. For example, the no number frame may be a frame in a lead portion of the film in advance of a nominal frame number zero. Again, the no number frame can be a frame whose number is obscured, e.g. by edge fogging. What is actually identified is thus a notional frame number which does not actually appear on the film - the identification of frames themselves is discussed below.

In a practical embodiment, relative frame number identities may be assigned to actual frame numbers which are detected but not identified, until an identifiable actual frame number is reached, and a correcting or difference number can then be determined and then combined with the relative frame numbers to identify the corresponding actual frame numbers. This can have particularly useful application to a case in which the whole film is scanned first before the photographic printing operation.

With a view particularly to photofinishing laboratories where scanning occurs at one place and the printing operation occurs elesewhere, the method or means can be extended to produce a marking, in machine readable form on or for the film, of the frame number of a predetermined frame, especially the reference frame number, or may simply be adapted for machine reading of such a number, e.g. if it is produced and/or put on to the film manually.

It will be apparent that all of the description of embodiments of the invention so far has been directed to identifying frame numbers. In the context of using these numbers to identify frames, the frames themselves must be associated with the numbers identified, so that in application of the embodiments, they are adapted to combine information identifying frame numbers with input information indicating the occurrence of frames, in order to identify a frame by number. For example, a first frame is identified corresponding to the reference frame number and the occurrence of subsequent or precedent frames is detected and the nearest corresponding frame number is associated with that frame, or, if two such numbers occur, a simple rule is made to determine which one is chosen, e.g. the smaller one or the one without an "A".

For a better understanding of the present invention, reference will now be made, by way of example only, to the accompanying drawing in which:-
Figure 1 is a diagrammatic representation of a section of typical 35mm film with associated frames, edge numbers, sprocket holes and blocks of DX barcode; and
Figure 2 is a view similar to Figure 1 showing the positioning of a viewframe according to particular embodiments of the invention and indicating schematically features of other embodiments of the invention.

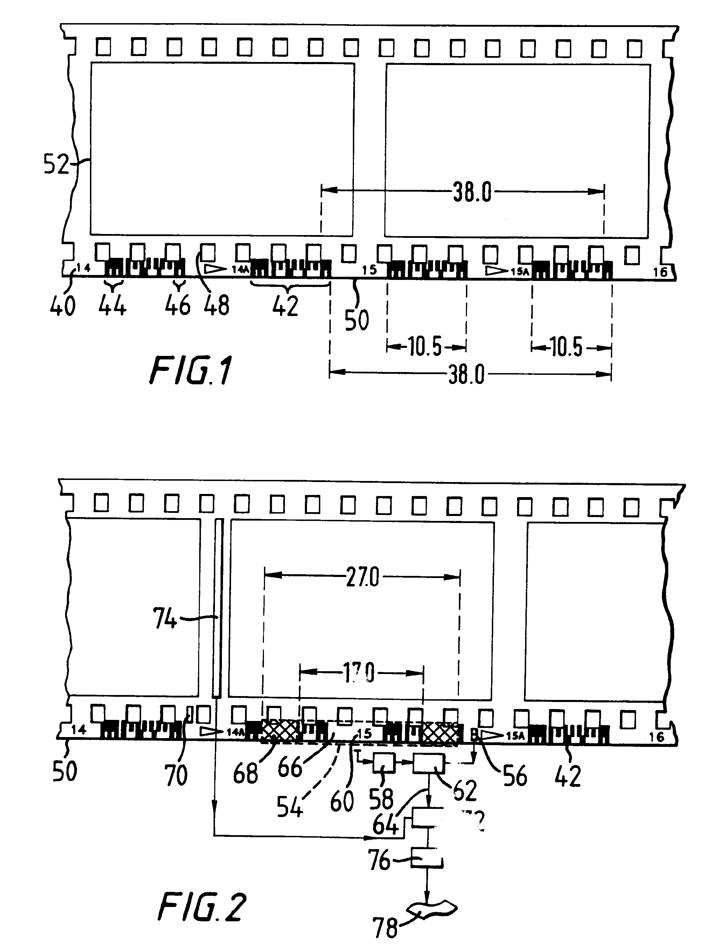

Referring to the drawing, a typical piece of 35mm film, incorporating full frame numbering and DX barcode would appear as shown in Figure 1. The frame numbers 40 are shown as edge numbers. Blocks of DX barcode 42 are seen to be in the same track as numbers 40, the blocks 42 each comprising a "start" code section 44 and a "stop" code section 46. The dimensions are also shown in millimetres of frame intervals and barcode lengths. Sprocket holes 48 are also shown.

The same film 50 (though with its exposed frames 52 shifted approximately a half length) is shown in Figure 2 with a viewframe 54, barcode reader 56 (indicated by its aperture), means 58 for registering the edge number 60 identified manually by means of viewframe 54 and means 62 for combining this information from register 58 with detection information from reader 56 to produce at output 64 an identification of other frame numbers 40.

If the frame number 60 of the image in the print-gate is known, a printer equipped with a barcode reader 56 can infer the number of any other image by counting the number of blocks 42 of barcode which pass the reader 56 as another image is moved into the print-gate. For each block 42 of barcode which passes the reader 56, means 62 serving as a frame counter can be incremented (or decremented) by a unit (corresponding to one edge number) of a half (where alternate half frames are designated by the suffix "A") .

The viewframe 54 constitutes means for visually identifying (i.e. for use in identifying) one frame number 60, while means 58 serve for registering such number. Reader 56 constitutes means for detecting the occurrence of subsequent and/or precedent other frame numbers or corresponding indications (such as blocks 42 of barcode). Means 62 serve to combine these items of information to identify at least one other frame number 40. Means 62 operate by incrementing or decrementing the reference frame number 60 correspondingly to the detection by reader 56 of the occurrence of the other numbers 40.

As seen in Figure 2, the viewframe 54 is adapted to facilitate selection of one of two adjacent frame numbers (shown as 14A and 15) appertaining to a frame (the central one in Figure 2) for visual identification of the reference frame number in the case of an operator-attended printer. The operator aligns the first image in the print-gate as usual. Using the viewframe 54, he types into register 58 the frame number of that image. In order to be sure of having at least one number visible in the field of view of viewframe 54 at all times (as the placement of numbers and DX blocks varies between different manufacturers) the field of view must be 27mm wide. This is calculated as 38mm which is the pitch over which the numbering pattern repeats itself, minus 11mm, the approximate width of one block 42 of barcode. This assists the operator to recognise the correct frame number. The viewframe 54 has within its field of view a central portion 66 (shown unshaded in Figure 2) and a distinctive edge portion 68 (shown shaded in Figure 2). At approximately 17mm, the central portion 66 is slightly shorter than half of 38mm. In most cases, there will be just one frame number 40 visible in central portion 66, in which case the operator can type it directly into register 58. In very unusual circumstances (not true for all major film manufacturers) it may occur that two numbers or parts of two numbers are visible in the central area. (In the latter case, the operator can still see these numbers by virtue of edge portion 68, although this portion will be clearly distinctive by being coloured and/or of a reduced visibility, e.g. grey). The operator will, depending upon the convention used, choose between the two numbers, and will, for example, in this case type in the number which has no "A" suffix.

In a small percentage of cases no number will be visible in the central portion 66, but, instead, two numbers will be visible, one on each side of the central portion 66 in the outer portions 68, and the operator will again type in the number without the suffix.

The frame number of the first image to be printed (the reference frame number) having been typed into register 58, the reader 56 will automatically increment (or decrement, if films are printed last-frame first) the reference frame number in the register 58, so that this acts as a frame counter , according to the number of blocks of DX code which pass the reader 56.

It will be apparent it is only necessary to identify a frame number and the distance to an appropriate part of the print-gate, and the frame number of any frame stopped in the gate for printing will then be known.

It is currently possible for a customer to expose a printable image on the leader of a 35mm film where there is no edge numbering. In these cases, the operator can type in a character which will initiate a message to the effect of "NO NUMBER" to be written on the back of the print. Automatic incrementing of the frame counter will only start after a valid number has been typed in.

Another problem which can occur is that of edge fog obscuring the frame numbers. A printer may be equipped with a perforation detector 70 for detecting sprocket holes. These (or at least every fourth one) can serve as the aforethe corresponding indications whose occurrence is detected in order to identify at least one of the other frame numbers. This is the same manner of operation as has just been described for DX barcode reader 56 and can be used instead of using reader 56. However, in connection with obscuring of frame numbers by edge fog (and indeed of blocks 42 of barcode), the output of detector 70 can be used by the printer to detect a non-correlation between the DX blocks 42 and the perforations passing the reader. This can then be used to inhibit the printing of the contents of register 58 and instead to initiate a different message as "** - OBSCURED" where ** is the number that is obscured. This method can be used for identifying any notional frame number 40 not appearing on the film 50 or obscured on it.

While the embodiments so far described are particularly suitable to minilabs with an operator in attendance, a particularly useful embodiment can be made which is entirely automatic and is suitable for high-speed printers. This is based on automatic identification of one of the numbers 40 to serve as the reference frame number which is first identified.

A particularly convenient method of doing this is to utilize the barcode reader 56. It has been determined by experiment that the usual kind of such reader can be used for distinguishing the number of characters in an edge number 40. Two numbers which are highly characteristic in a series of edge numbers of the type 1, 1A, 2, 2A, etc are the numbers 9 and 10A, since these numbers have the characteristic that the former is the last single digit edge number 40 and the latter is the first triple digit edge number 40. These frame numbers having distinctive characteristics are preferable e.g. to "0", the first frame number, because the first one or more frame numbers at the lead portion of the film may be missing or fogged.

In a development, means 62 operate a marker 72 which produces a marking in machine-readable form for the film. This marking is of the frame number of a predetermined frame and may be printed directly on to the film or on to a self-adhesive label to be attached to the film for future machine reading thereof. This number can then serve as the reference frame number which is identified in order to identify the other frame numbers.

Instead of a self-adhesive label, a more automatic process is provided if this number is encoded as a series of holes punched either in the film or in the splice between one such film 50 and another on the usual roll formed for a high-speed printing process. Again, the number could be in a machine-readable barcode either printed by the usual notcher on the splice or the film itself or on a self-adhesive label which is then stuck to the film or the splice. Again, the reference frame number for first identification in each film in a spliced reel can be written to a magnetic medium, e.g. a magnetic track on the film or a separate floppy disk, which would be transferred to the printer with the reel of films 50.

A variant of this is possible if there is some form of unique machine-readable identification number already on the films 50 as they are notched. The reference frame number for first identification is written to the disk along with the film identification number. (This can also be used as an additional safeguard against the wrong disk going to the printer.) It will be apparent that, in some of these cases, the reader 56 could be used to read an appropriate machine-readable form of the reference frame number, whether or not such number was placed on to the film by any of the means just described.

Marker 72 thus has two functions: it acts as a temporary register of the frame number 40 identified with any particular frame 52 and it also serves to produce a marking in machine-readable form of a particular number 40, i.e. the reference frame number 60. By virtue of the register function, marker 72 can transmit every identified number to the usual photographic copying station to operate any convenient means 76 to write the identified frame number 40 for every frame 52 on to the back of the print 78 made from that frame. The transmission may be immediate or delayed, depending upon the relationship between the scanning station and the photographic copying (printing) station.

It is particularly to be noted that usual reader 56 to read DX barcode already has two sensors for the usual two tracks of the code. In accordance with embodiments with the present invention these can be used to detect unambiguously the gap between alphanumeric characters of the frame numbers (by using suitable detecting thresholds for the outputs from the two sensors and suitably combining the resultant signals) in order to determine the number of alphanumeric characters in each frame number which passes reader 56.

Uses of various embodiments of the invention can be summarized as follows. They can be chosen for high-speed laboratories (usually using notched film) or for minilabs (hand-operated and usually using unnotched film).

For a high speed laboratory, if the printing and scanning stations are separated by more than 11 frames, automatic detection of an edge number such as 10A is used. If not, a pre-identified edge frame number is used together with means to transfer this information to the printing station.

For minilabs, if the scanning and printing stations are separated by more than 11 frames, automatic detection of an edge number such as 10A is used. If not, the operator identifies a first frame number 40, e.g. by means of a viewframe 54, and inputs this to register 58.

It will be apparent from the foregoing that the invention will usually be applied not only to identifying frame numbers but to identifying frames themselves by means of these numbers. For this purpose, there will be used means adapted to combine information identifying such frame numbers, e.g produced at output 64 of the embodiments described above, with input informaton from a frame position indicator 74 (perhaps used simply as a frame occurrence indicator). Such combining means may be incorporated in printer 72. Clearly, some algorithm will be needed to decide which of the two half-frame numbers is to be associated with the frame. This can be done by known methods.

## Claims

1. A method of identifying frame numbers (40, 60) on a film strip (50) which comprises a plurality of frames (52) with at least one frame number (40, 60) corresponding to each frame (52), the frame numbers (40, 60) being arranged along an edge of the film strip (50), the method comprising:-
identifying a reference frame number;
detecting the occurrence of subsequent and/or precedent other frame numbers (40, 60) or corresponding indications (42, 44, 46; 48); and
using these items of information in combination to identify at least one of the other frame numbers (40, 60);
characterized in that the reference frame number is identified using machine detection to detect the number of digits present in each of the frame numbers (40, 60).

2. A method according to Claim 1, characterized in that the frame numbers (40, 60) are of the type 1, 1A, 2, 2A etc, and in that the reference frame number is determined by identification of the frame numbers 9 or 10A.

3. A method according to Claim 1 or 2, characterized in that the reference frame number is incremented or decremented in accordance with the detection of the occurrence of subsequent and/or precedent other frame numbers (40, 60) or corresponding indications (42, 44, 46; 48) to assign an appropriate frame number (40, 60) to the subsequent and/or precedent frames (52).

4. A method according to any one of Claims 1 to 3, characterized in that the identification of the reference frame number is made visually using a viewframe (54) adapted to facilitate selection of one of two adjacent frame numbers (40, 60) apertaining to a particular frame (52).

5. A method according to claim 4, characterized in that the viewframe (54) used has within its field of view a central portion (66) and a distinctive edge portion (68).

6. A method according to any one of the preceding Claims, wherein the film strip (50) has sprocket holes (48), characterized in that the corresponding indications which are detected comprise these sprocket holes.

7. A method according to any one of the preceding Claims, wherein the film strip (50) has blocks of DX barcode (42, 44, 46), characterized in that the corresponding indications which are detected comprise these blocks.

8. A method according to Claim 7, characterized in that a reader (56) for reading the DX barcode (42, 44, 46) is used also to detect the occurrence of and/or a characteristic of the frame numbers (40, 60).

9. A method according to any one of the preceding Claims, characterized in that it is adapted to identify a notional frame number not appearing on or obscured on the film.

10. A method according to any one of the preceding Claims, characterized in that it comprises marking, in machine readable form on the film, the frame number of a predetermined frame, and/or machine reading such a number which constitutes the reference frame number.

11. A method according to any one of the preceding Claims, characterized in that information identifying frame numbers is combined with information indicating the occurrence of frames in order to identify a frame by number.

## Patentansprüche

1. Verfahren zum Identifizieren von Bildnummern (40, 60) auf einem Filmstreifen (50) mit einer Vielzahl von Bildfeldern (52), denen jeweils mindestens eine der längs einer Kante des Filmstreifens (50) angeordneten Bildnummern (40, zugeordnet ist, wobei
eine Bezugs-Bildnummer identifiziert,
das Vorhandensein darauf folgender und/oder vorhergehender weiterer Bildnummern (40, 60) oder entsprechender Codierungen (42, 44, 46; 48) festgestellt und
eine Kombination dieser Informationen dazu verwendet wird, um mindestens eine weitere der Bildnummern (40, 60) zu ermitteln,
**dadurch gekennzeichnet,** daß die Bezugs-Bildnummer unter Verwendung maschineller Lesemittel festgestellt wird, mit denen die Anzahl der Stellen einer jeden Bildnummer (40, 60) ermittelbar ist.

2. Verfahren nach Anspruch 1, dadurch gekennzeichnet, daß es sich bei den Bildnummern (40, 60) um eine Reihe des Typs 1, 1A, 2, 2A etc. handelt und die Bezugs-Bildnummer durch Identifizieren der Bildnummern 9 oder 10A ermittelt wird.

3. Verfahren nach Anspruch 1 oder 2, dadurch gekennzeichnet, daß die Bezugs-Bildnummer entsprechend der Ermittlung vorhandener nachfolgender und/oder vorausgehender weiterer Bildnummern (40, 60) oder entsprechender Codierungen (42, 44, 46; 48) inkrementiert oder dekrementiert wird, um den nachfolgenden und/oder vorausgehenden Bildfeldern (52) die richtige Bildnummer (40, 60) zuzuordnen.

4. Verfahren nach einem der Ansprüche 1 bis 3, dadurch gekennzeichnet, daß die Bezugs-Bildnummer visuell unter Verwendung eines Betrachtungsrahmens (54) identifiziert wird, der die Auswahl einer von zwei benachbarten, zu einem bestimmten Bildfeld (52) gehörenden Bildnummern (40, 60) erleichtert.

5. Verfahren nach Anspruch 4, dadurch gekennzeichnet, daß der verwendete Betrachtungsrahmen (54) innnerhalb seines Sichtfeldes einen mittleren Bereich (66) und einen davon unterschiedenen Kantenbereich (68) aufweist.

6. Verfahren nach einem der vorhergehenden Ansprüche, bei dem ein Filmstreifen (50) mit Perforationslöchern (48) verwendet wird, dadurch gekennzeichnet, daß es sich bei den festgestellten Codierungen um diese Perforationslöcher handelt.

7. Verfahren nach einem der vorhergehenden Ansprüche, bei dem ein Filmstreifen (50) mit DX-Strichcodierungs-Blöcken (42, 44, 46) verwendet wird, dadurch gekennzeichnet, daß es sich bei den festgestellten Codierungen um diese Strichcodierungs-Blöcke handelt.

8. Verfahren nach Anspruch 7, dadurch gekennzeichnet, daß ein Lesegerät (56) zum Lesen der DX-Strichcodierung (42, 44, 46) außerdem dazu verwendet wird, die Anwesenheit von Bildnummern (40,60) und/oder ein charakteristisches Merkmal dieser Nummern festzustellen.

9. Verfahren nach einem der vorhergehenden Ansprüche, dadurch gekennzeichnet, daß es die Feststellung einer theoretisch vorhandenen, jedoch auf dem Film nicht erscheinenden oder erkennbaren Bildnummer erlaubt.

10. Verfahren nach einem der vorhergehenden Ansprüche, dadurch gekennzeichnet, daß die Bildnummer eines vorbestimmten Bildfelds auf dem Film in maschinenlesbarer Form angebracht und/ oder eine solche die Bezugs-Bildnummer darstellende Nummer maschinell gelesen wird.

11. Verfahren nach einem der vorhergehenden Ansprüche, dadurch gekennzeichnet, daß die die Bildnummern identifizierenden Informationen mit die Anwesenheit von Bildfeldern angebenden Informationen kombiniert werden, um ein Bildfeld durch seine Nummer zu identifizieren.

## Revendications

1. Procédé d'identification de numéros de vues (40, 60) sur une bande de pellicule (50) qui comprend plusieurs vues (52), au moins un numéro de vue (40, 60) correspondant à chaque vue (52), les numéros de vues (40, 60) étant disposés le long d'un bord de la bande de pellicule (50), le procédé comprenant les opérations suivantes:
identifier un numéro de vue de référence;
détecter l'apparition d'autres numéros de vues, suivants et, ou bien, précédents, (40, 60) ou d'indications correspondantes (42, 44, 46 ; 48); et
utiliser ces éléments d'information en combinaison pour identifier au moins l'un des autres numéros de vues (40, 60);
le procédé étant caractérisé en ce qu'on identifie le numéro de vue de référence en faisant appel à une détection en machine pour détecter le nombre de chiffres présents dans chacun des numéros de vues (40, 60).

2. Procédé selon la revendication 1, caractérisé en ce que les numéros de vues (40, 60) sont du type 1, 1A, 2, 2A, etc., et en ce que le numéro de vue de référence est déterminé par l'identification du numéro de vue 9 ou 10A.

3. Procédé selon la revendication 1 ou 2, caractérisé en ce que le numéro de vue de référence est incrémenté ou décrémenté en fonction de la détection de l'apparition d'autres numéros de vues suivants et, ou bien, précédents (40, 60) ou d'indications correspondantes (42, 44, 46 ; 48) pour permettre d'attribuer un numéro de vue approprié (40, 60) aux vues suivantes et, ou bien, précédentes (52).

4. Procédé selon l'une quelconque des revendications 1 à 3, caractérisé en ce qu'on effectue visuellement l'identification du numéro de vue de référence à l'aide d'un cadre de visée (54) destiné à faciliter la sélection de l'un des deux numéros de vue adjacents (40, 60) appartenant à une vue particulière (52).

5. Procédé selon la revendication 4, caractérisé en ce que le cadre de visée (54) utilisé possède, à l'intérieur de son champ de visée, une partie centrale (66) et une partie marginale distinctive (68).

6. Procédé selon l'une quelconque des revendications précédentes, où la bande de pellicule (50) possède des trous d'entraînement (48), caractérisé en ce que les indications correspondantes qui sont détectées comprennent ces trous d'entraînement.

7. Procédé selon l'une quelconque des revendications précédentes, où la bande de pellicule (50) possède des blocs de code à barres DX (42, 44, 46), caractérisé en ce que les indications correspondantes qui sont détectées comprennent ces blocs.

8. Procédé selon la revendication 7, caractérisé en ce qu'on utilise également un lecteur (56) du type servant à lire le code à barres DX (42, 44, 46), pour détecter l'apparition des numéros de vues (40, 60) et, ou bien, d'une caractéristique de ceux-ci.

9. Procédé selon l'une quelconque des revendications précédentes, caractérisé en ce qu'il est conçu pour identifier un numéro de vue fictif n'apparaissant pas sur la pellicule ou étant obscurci.

10. Procédé selon l'une quelconque des revendications précédentes, caractérisé en ce qu'il comprend l'opération de repérage, sous une forme visible en machine sur la pellicule, du numéro de vue d'une vue prédéterminée et, ou bien, la lecture en machine de ce numéro qui constitue le numéro de vue de référence.

11. Procédé selon l'une quelconque des revendications précédentes, caractérisé en ce que l'information identifiant des numéros de vues est combinée avec l'information indiquant l'apparition de vues pour l'identification d'une vue par un numéro.
